# EUROPEAN PATENT APPLICATION

(11) **EP 2 228 749 A1**
(43) Date of publication of application: **15.09.2010**
(21) Application number: 10155789.0
(22) Date of filing: 08.03.2010
(51) Int. Cl.: G06K 7/10

(54) **RFID antenna system and control method of the same**

(30) Priority: 10.03.2009 KR 20090020434
(71) Applicant: LS Industrial Systems Co., Ltd, Gyeonggi-do 431-080 (KR)
(72) Inventor: Hong, Jin Kuk, 445-723 Gyeonggi-do (KR); Ryoo, Jeong Ki, 305-759 Daejeon (KR); Choo, Jae Yul, 448-531 Gyeonggi-do (KR)
(74) Representative: Karlsson, Leif Karl Gunnar

(57) **Abstract**

The present disclosure relates to an RFID (Radio frequency identification) antenna system and control method of the same, wherein the system includes a first antenna group including a plurality of first antennas (110), a second antenna group including a plurality of second antennas (120), a reader transmitting a transmission-only command to the first antenna group so that the first antenna group functions as a transmission-only antenna transmitting information request data to an RFID tag, and receiving object data included in the tag transmitted in opposition to the information request data through the second antenna group, and a data processing server receiving a plurality of object data transmitted to the reader via the plurality of second antenna for use in data processing.

## Description

### BACKGROUND OF THE DISCLOSURE

### Field

The present disclosure relates to an RFID (Radio Frequency Identification) antenna system including a plurality of antennas and control method of the same configured to perform a transmission-only function or a reception-only function according to command of a reader.

### Background

Generally, an RFID (Radio Frequency Identification) technique is a technique for identifying a data carrier by using a radio wave without contact. With this technique, a tag (RFID tag) in which an IC chip and an antenna are embedded is attached to an object or a person, a device called an RFID reader/writer, and the RFID tag make a communication by using a radio wave, and the RFID reader/writer reads information stored in the IC chip (RFID tag IC), whereby the object or the person is identified. The Radio frequency identification (RFID) tags are electronic devices that may be affixed to items whose presence is to be detected and/or monitored. To be more specific, the RFID system employs an RFID tag that is attached to a product to transmit detailed information, and an RFID transmitter/receiver capable of reading identification information stored in the RFID tag using an RF communication. The RFID tag transmits information using radio frequency communication by passing through an area positioned with the transmitter/receiver to provide a base for an effective control on logistics/distribution such as product distribution, assembly, price change and marketing.

In recent years, a technique using a MIMO (Multiple Input Multiple Output) antenna has become popular in the field of wireless communication. A MIMO system employs multiple transmission antennas and multiple reception antennas for data transmission.

In other words, the MIMO antenna is an antenna system capable of multiple input and output. The MIMO antenna technique is such that the number of antennas in a base station and in an antenna system of a portable terminal is increased to two or more to send data via various routes, and a signal received via various routes is detected by a receiving end, whereby interference is reduced and transmission speeds are respectively lowered.

To be more specific, in a MIMO antenna system, a high-rate data stream is divided into multiple lower-rate data streams. The lower-rate data streams are individually modulated and transmitted through separate antennas at the same time and using the same frequency channel. The multiple transmitted signals experience multi-path reflections as the transmitted signals travel from the multiple antennas of the base station to the multiple antennas of the receiving mobile station. The output of each receiver antenna is a linear combination of the multiple transmitted RF signals. Within the receiver, the multiple lower-rate data streams are detected and recovered by well-known MIMO algorithms.

Although many more years must pass before the MIMO-base system is used en mass by consumers and business fields, improvement and renovation of MIMO system will have to be continued. Concomitant with advancement of wireless LAN (Local Area Network), the MIMO system has shown a potentiality for the future capable of transmitting as many bandwidths as the currently typical wired communication bandwidth (100Mbps/s). As a breakthrough in performance, the MIMO system will be used in various fields such as 3G hot spot for consumers, medical areas, industrial fields and business data communications, transmission of HDTV signal to homes and other various applications.

### SUMMARY

The present disclosure is disclosed to obviate the above-mentioned disadvantages, and it is an object of the present disclosure to provide an RFID (Radio Frequency Identification) antenna system having a plurality of antennas configured to perform a transmission-only function or a reception-only function according to command of a reader and a control method of the same.

In one general aspect of the present disclosure, an RFID (Radio frequency identification) antenna system, comprises: a first antenna group including a plurality of first antennas; a second antenna group including a plurality of second antennas; a reader transmitting a transmission-only command to the first antenna group so that the first antenna group functions as a transmission-only antenna transmitting information request data to an RFID tag, and receiving object data included in the tag transmitted in opposition to the information request data through the second antenna group; and a data processing server receiving a plurality of object data transmitted to the reader via the plurality of second antenna for use in data processing.

In some exemplary embodiments, the plurality of first antennas and the plurality of second antennas may be installed in such a manner that types of groups are repeatedly alternated.

In some exemplary embodiments, the reader may receive the object data via the first antenna group by interchanging between the first antenna group and the second antenna group in response to a switching signal, and transmit the transmission-only command to the second antenna group.

In some exemplary embodiments, the RFID antenna system may further comprise a proximity sensor generating a proximity signal by detecting, by a tag, whether an attached object has proximately approached, wherein the reader transmits the transmission-only command to the first antenna group in response to the proximity signal of the proximity sensor.

In some exemplary embodiments, the RFID antenna system may further comprise a gate configured for the object to pass, wherein the proximity sensor is installed at a point before the object passes the gate.

In some exemplary embodiments, the RFID antenna system may further comprise a charging antenna, wherein the charging antenna transmits a charging command for charging a charge capacitor included in the tag attached to the object.

In some exemplary embodiments, the RFID antenna system may further comprise a gate configured for the object to pass, wherein the charging antenna is installed at a point before the object passes the gate.

In some exemplary embodiments, the first antenna group including a plurality of first antennas and the second antenna group including a plurality of second antennas may include a bar-type antenna attached perpendicular to the ground, or a flat-type antenna attached to the ground in parallel with the ground.

In another general aspect of the present disclosure, a control method of an RFID antenna system comprises: installing a first antenna group including a plurality of first antennas and a second antenna group including a plurality of second antennas; transmitting, by a reader, a transmission-only command to the first antenna group so that the first antenna group functions as a transmission-only antenna transmitting information request data to an RFID tag; receiving, by the reader, object data of the tag transmitted in opposition to the information request data via the second antenna group; and performing a data process in a data process server by receiving a plurality of object data transmitted from the reader via the plurality of second antennas.

In some exemplary embodiments, the plurality of first antennas and the plurality of second antennas may be installed in such a manner that types of groups are repeatedly alternated.
In some exemplary embodiments, the reader may receive the object data via the first antenna group by interchanging between the first antenna group and the second antenna group in response to a switching signal, and transmit the transmission-only command to the second antenna group.

### ADVANTAGEOUS EFFECTS

The RFID antenna system related to at least one of the exemplary embodiments according to the present disclosure thus configured is advantageous in that the antenna can be used for transmission-only or reception-only purpose to enhance the recognition rate with a reduced emission power.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description, serve to explain the principle of the disclosure. In the drawings:
FIG. 1 is a block drawing of an RFID antenna system according to an exemplary embodiment of the present disclosure;
FIG.2 is a flowchart illustrating a control process of an RFID antenna system according to an exemplary embodiment of the present disclosure;
FIG.3 is a schematic view illustrating an RFID antenna system according to another exemplary embodiment of the present disclosure;
FIG.4 is a schematic view illustrating an arrangement of an RFID antenna system including a flat antenna according to another exemplary embodiment of the present disclosure;
FIG. 5 is a table explaining a command status of a reader interchanging antenna function based on switching operation according to another exemplary embodiment of the present disclosure; and
FIG.6 is a schematic diagram illustrating a reception rate that increases when a MIMO (Multiple Input Multiple Output) antenna is used according to an exemplary embodiment of the present disclosure.

### DETAILED DESCRIPTION

Hereinafter, exemplary embodiments of the present disclosure are described in detail with reference to the accompanying drawings. Detailed descriptions of well-known functions, configurations or constructions are omitted for brevity and clarity so as not to obscure the description of the present disclosure with unnecessary detail. Furthermore, the same reference numerals will be assigned to the same elements in the explanation of the figures.

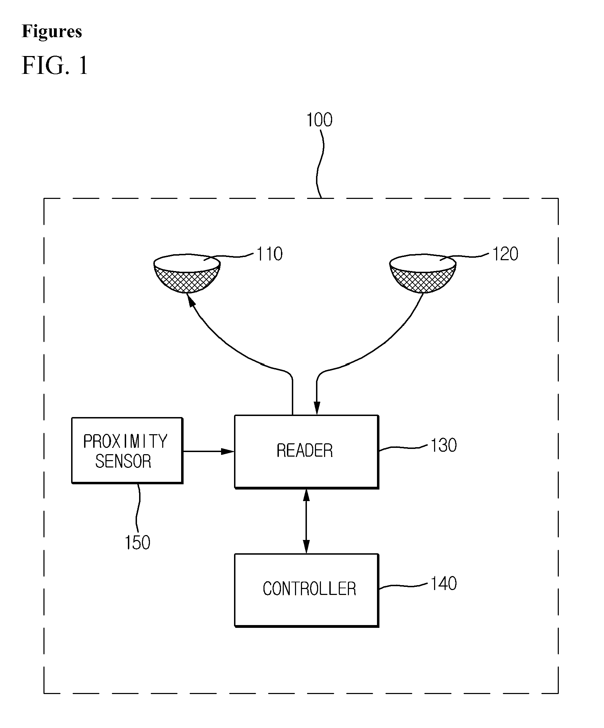

FIG. 1 is a block drawing of an RFID antenna system according to an exemplary embodiment of the present disclosure.

Referring to FIG.1, an RFID antenna system includes a plurality of first antennas (110), a plurality of second antennas (120), a reader (130), a data processing server (140) and a proximity sensor (150).
The plurality of first antennas (110) receives a transmission-only command from the reader (130) and transmits information request data to the tag. In a case the reader (130) transmits the transmission-only command to the plurality of second antennas (120) based on switching operation of the reader (130), the plurality of first antennas (110) receives the object data from the tag. The information request data means a request data for receiving information of the tag attached on the object.
The plurality of second antennas (120) may be interchangeable with the function of the plurality of first antennas (110). For example, in a case the plurality of first antennas (110) receives the transmission-only command from the reader (130), the plurality of second antennas (120) receives the object data from the tag and transmits the object data to the reader (130).
Furthermore, in a case the plurality of second antennas (120) receives a transmission-only command from the reader (130), the information request data is transmitted to the tag.
The plurality of first antennas (110) and the plurality of second antennas (120) are so installed that types of groups are interchanged repeatedly within the RFID antenna system. For example, the types of groups may be interchangeably installed in the form of a first antenna, a second antenna, a first antenna and a second antenna. The antenna array may be determined based on beam width and application environment.

The plurality of first antenna group and the plurality of second antenna group may be a bar-type antenna group attached perpendicular to the ground, or a flat-type antenna group attached to the ground in parallel with the ground. The bar-type antenna may secure a predetermined height or a higher height relative to data transmission/reception in consideration of the size of the object. The flat-type antenna may increase the transmission/reception rate of the antenna by using an enlarged surface.

A frequency band used between the first antenna group (110) and the second antenna group (120) and the tag is UHF band, such that intermediate/long distance signal transmission is possible and a high speed transmission is also possible.
The reader (130) is connected to the first antenna group (110) and the second antenna group (120) to control the first antenna group (110) and the second antenna group (120).
To be more specific, the reader (130) may transmit the transmission-only command so that the first antenna group (110) can function as a transmission-only antenna transmitting the information request data to the tag, and the reader (130) can receive the object data included in the tag transmitted in opposition to the information request data via the second antenna group (120).

The reader (130) may control in such a manner that the first antenna group (110) and the second antenna group (120) are functionally interchanged by a switching operation. For instance, the reader (130) may transmit a first transmission-only command to the first antenna group (110), and receive an object data of the tag corresponding to the first transmission-only command through the second antenna group (120). Thereafter, the reader (130) may make each antenna compatible functionally whereby the second transmission-only command is transmitted to the second antenna group (120) while the object data of the tag corresponding to the second transmission-only command may be received by the first antenna group (110).

The RFID antenna system may include a proximity sensor (150). In a case the reader (130) receives a proximity signal from the proximity sensor (150), the reader (130) starts to transmit the transmission-only command to the first antenna group (110) or the second antenna group (120). The reader (130) may receive the object data transmitted from the tag and transmit the data to the data processing server (140) for data processing.
According to the present disclosure, the reader (130) may be connected to a single antenna or the plurality of first antennas (110) and the plurality of second antennas (120)

The data processing server (140) may receive a plurality of object data via the reader (130) and perform the data processing operation. The object data transmitted to the data processing server (140) can enhance the reception rate, because the object data becomes multiple data transmitted via the plurality of second antennas included in the second antenna group (120).
The proximity sensor (150) detects whether the object has proximately approached to generate a proximity signal. The proximity sensor (150) may be installed at a front of a gate configured for the object to pass. The meaning of front of gate is that the proximity sensor (150) is installed at a point before the object passes the gate for detecting a point before the object passes the gate.

The proximity sensor (150) may generate a proximity signal for notifying that the object has proximately approached if the object approaches within a predetermined region of the proximity sensor (150). The reader (130) having received the proximity signal may control the RFID antenna system and the object in such a manner that the data transmission/reception is conducted between the RFID antenna system and the object.
The RFID antenna system may further include a charging antenna. The charging antenna may transmit a charging command for charging a charge capacitor included in the tag attached to the object. The charging antenna may be installed at a front of a gate configured for the object to pass.

A control method of an RFID antenna system according to an exemplary embodiment of the present disclosure comprises: installing a first antenna group including a plurality of first antennas and a second antenna group including a plurality of second antennas; transmitting, by a reader, a transmission-only command to the first antenna group so that the first antenna group functions as a transmission-only antenna transmitting information request data to an RFID tag; receiving, by the reader, object data of the tag transmitted in opposition to the information request data via the second antenna group; and performing a data process in a data process server by receiving a plurality of object data transmitted from the reader via the plurality of second antennas.
The plurality of first antennas and the plurality of second antennas are installed in such a manner that types of groups are repeatedly alternated. Furthermore, the reader receives the object data via the first antenna group by interchanging between the first antenna group and the second antenna group in response to a switching signal, and transmits the transmission-only command to the second antenna group.

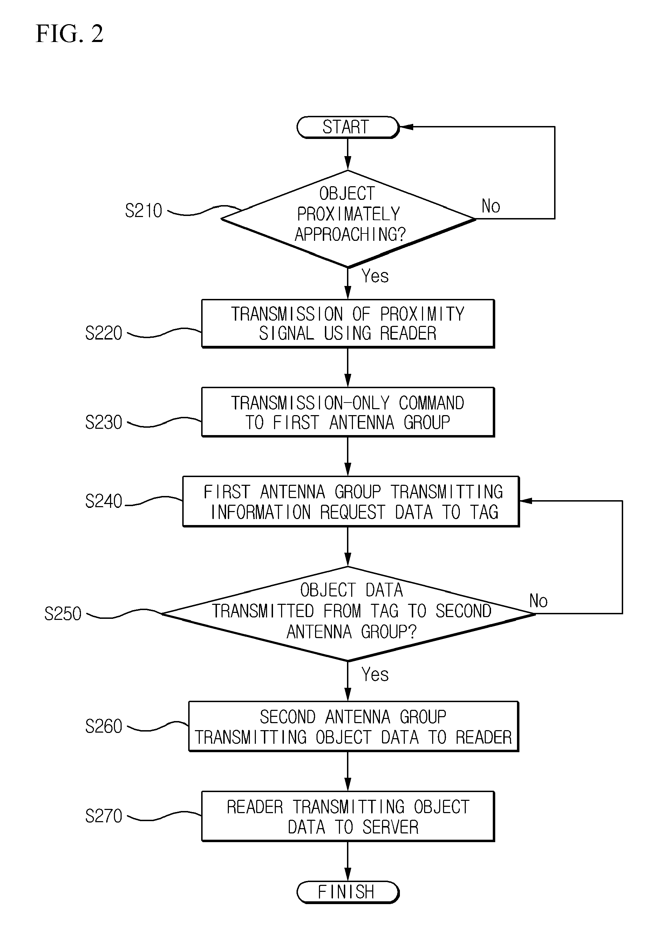

FIG.2 is a flowchart illustrating a control process of an RFID antenna system according to an exemplary embodiment of the present disclosure.

Referring to FIG.2, in a case an object approaches the RFID antenna system (S210), the proximity sensor included in the RFID antenna system transmits a proximity signal to the reader (S220). The reader (130) that has received the proximity signal transmits a transmission-only command to the first antenna group, so that the first antenna group can function as a transmission-only antenna (S230). The first antenna group transmits the information request data to the tag based on the transmission command (S240), and waits for a response in which the tag responds to the information request data.
In a case the object data corresponding to the information request data is transmitted from the tag to the second antenna group (S250), the second antenna group transmits the object data to the reader (S260), where the reader transmits the object data to the data processing sever and conducts the data processing (S270).

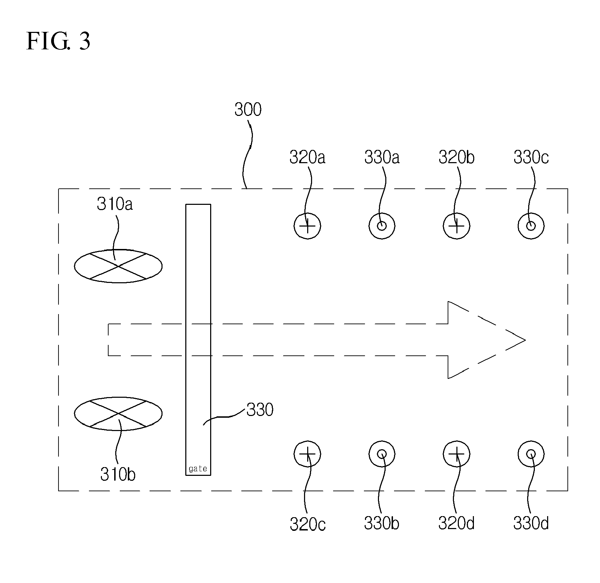

FIG.3 is a schematic view illustrating an RFID antenna system according to another exemplary embodiment of the present disclosure.

Referring to FIG. 3, an RFID antenna system (300) may include charging antennas (310a, 310b), a plurality of antennas (320a, 320b, 320c, 320d) of a first antenna group, and a plurality of antennas (330a, 330b, 330c, 330d) of a second antenna group. The RFID antenna system may also include a gate (330) configured for an object to pass therethrough, where the object moves in an arrow direction from the left hand side to the right hand side. The charging antennas (310a, 310b) are installed a front surface which is a point before the object passes the gate (330). The charging antennas (310a, 310b) mounted at the front surface of the gate charge a charge capacitor included in the tag attached to the object before the object approaches the gate to enhance the data transmission/reception rate of the tag and the RFID antenna system (300).

The plurality of antennas (320a, 320b, 320c, 320d) of the first antenna group, and the plurality of antennas (330a, 330b, 330c, 330d) of the second antenna group are installed in such a manner that the types of groups are repeatedly alternated.

Meanwhile, a plurality of antennas mounted at the rear left side of the gate may include a first antenna (320a) of the first antenna group, a first antenna (330a) of the second antenna group, a second antenna (320b) of the first antenna group and a second antenna (330b) of the second antenna group. The rear right side of the gate may be installed with the first and second antennas in the alternating method as above. The number of first and second antennas installed at the RFID antenna system (300) and an array position thereof may be variably changed according to exemplary embodiments of the present disclosure.

In a case an object passes the RFID antenna system (300) according to another exemplary embodiment of the present disclosure, a capacitor of the tag attached to the object is charged by the charging antennas (310a, 310b) installed at the front side of the gate. Thereafter, in a case the object passes the gate, the tag receives the information request data through the plurality of antennas (320a, 320b, 320c, 320d) of the first antenna group. The tag attached to the object may transmit the object data included in the tag in opposition to the information request data to the plurality of antennas (330a, 330b, 330c, 330d) of the second antenna group.

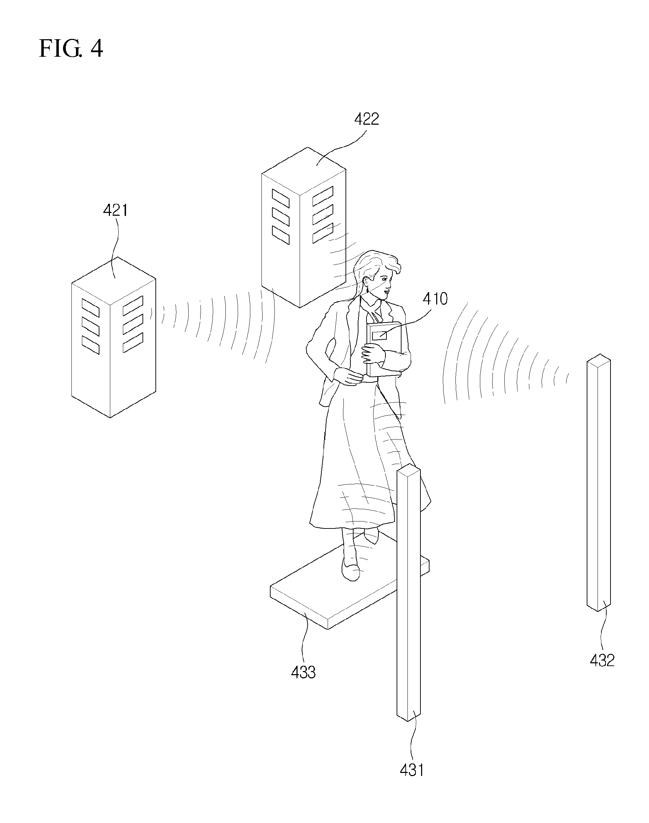

FIG.4 is a schematic view illustrating an arrangement of an RFID antenna system including a flat antenna according to another exemplary embodiment of the present disclosure.
Referring to FIG.4, an RFID antenna system including a ground antenna may include a tag (410), first antennas (421, 422) and second antennas (431, 432, 433).

Each of the first antennas (421, 422) takes the shape of a bar perpendicularly mounted on the ground, and is capable of transmitting and receiving data efficiently, even if the tag (410) passes the gate with a predetermined height. Each of the second antennas (431, 432, 433) may take the shape of bar and take the shape of a flat surface that is attached to the ground.

The bar type of antenna is configured to enable an efficient data transmission/reception with the tag (410) of the object having a predetermined height, while the flat surface type of antenna is configured to enable an enhanced object data reception rate transmitted from the tag (410) of the object using a large surface.

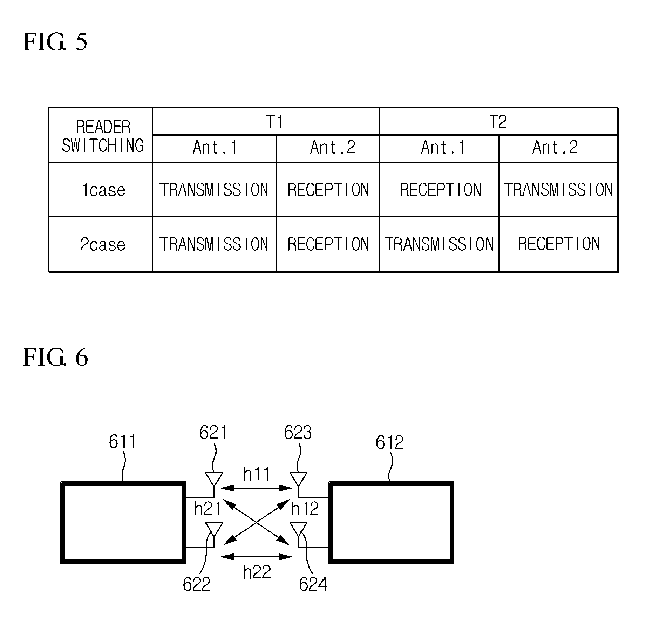

FIG. 5 is a table explaining a command status of a reader interchanging antenna function based on switching operation according to another exemplary embodiment of the present disclosure.

Referring to FIG.5, the reader may maintain or interchange the functions of the first group antennas and the second group antennas in response to reader switching. A first case indicates a reader that interchanges the functions of antennas in response to the reader switching, while a second case indicates a reader that maintains the functions of antennas in response to the reader switching.

Referring to the first case, the reader transmits a transmission-only command so that a first antenna (Ant 1) should function as a transmission-only antenna at a first time (T1), while the reader receives the object data transmitted from a second antenna (Ant 2) so that the second antenna (Ant 2) should function as a reception-only antenna. Successfully, the antenna functions are interchanged at a second time (T2), where the reader transmits the transmission-only command so that the second antenna (Ant 2) should function as the transmission-only antenna, and receives the object data transmitted from the first antenna (Ant 1) so that the first antenna (Ant 1) should function as a reception-only antenna.
As noted above, the interchange of antenna functions enables the reader to be prepared for the changed reception rate based on positions and directions.

Now, referring to the second case, the reader transmits the transmission-only command so that the first antenna (Ant 1) should function as the transmission-only antenna at the first time (T1), while the reader receives the object data transmitted from the second antenna (Ant 2) so that the second antenna (Ant 2) should function as the reception-only antenna. Successively, the reader transmits the transmission-only command to the first antenna and receives the object data from the second antenna so that each antenna should maintain the same function at the second time (T2).

FIG.6 is a schematic diagram illustrating a reception rate that increases when a MIMO (Multiple Input Multiple Output) antenna is used according to an exemplary embodiment of the present disclosure.

Referring to FIG.6, the MIMO (Multiple Input Multiple Output) antenna means an antenna system capable of performing a multiple input/output function. The MIMO antenna technique is such that the number of antennas in a base station and in an antenna system of a portable terminal is increased to two or more to send data via various routes, and a signal received via various routes is detected by a receiving end, whereby interference is reduced and transmission speeds are respectively lowered.

The antenna system of FIG.6 may include a tag (611) and a reader (612). The tag (611) may include transmission antennas (621, 622) capable of transmitting the object data to the reader. The reader (612) may include reception antennas (623, 624) capable of receiving the object data. The reception rate in the antenna system may be determined by a sum of channel impulse responses between the transmission antennas (621, 622) and the reception antennas (623, 624).

To be more specific, a 'h' is designated as a channel impulse response between a transmission antenna and a reception antenna, and an 's' is designated as a transmission signal via the transmission antenna. A signal received by the first reception antenna (623) may be formulated as "y1 = h11 * s1 + h 12 * s2 + n1", where n is a noise component of the reception antenna.

Furthermore, a signal received by the second reception antenna (624) may be formulated as "y2 = h21 * s1 + h 22 * s2 + n2". As noted from the two formulations, it can be judged that the reception rate increases when a plurality of transmission antennas and a plurality of reception antennas are used over use of a single antenna.

What has been described above includes examples of one or more aspects. It is, of course, not possible to describe every conceivable combination of components or methodologies for purposes of describing the aforementioned aspects, but one of ordinary skill in the art may recognize that many further combinations and permutations of various aspects are possible. Accordingly, the described aspects are intended to embrace all such alterations, modifications, and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. An RFID (Radio frequency identification) antenna system, comprising: a first antenna group including a plurality of first antennas; a second antenna group including a plurality of second antennas; a reader transmitting a transmission-only command to the first antenna group so that the first antenna group functions as a transmission-only antenna transmitting information request data to an RFID tag, and receiving object data included in the tag transmitted in opposition to the information request data through the second antenna group; and a data processing server receiving a plurality of object data transmitted to the reader via the plurality of second antenna for use in data processing.

2. The RFID antenna system of claim 1, wherein the plurality of first antennas and the plurality of second antennas are installed in such a manner that types of groups are repeatedly alternated.

3. The RFID antenna system of claim 1, wherein the reader receives the object data via the first antenna group by interchanging between the first antenna group and the second antenna group in response to a switching signal, and transmit the transmission-only command to the second antenna group.

4. The RFID antenna system of claim 1, further comprising a proximity sensor generating a proximity signal by detecting, by a tag, whether an attached object has proximately approached, wherein the reader transmits the transmission-only command to the first antenna group in response to the proximity signal of the proximity sensor.

5. The RFID antenna system of claim 4, further comprising a gate configured for the object to pass, wherein the proximity sensor is installed at a point before the object passes the gate.

6. The RFID antenna system of claim 1, further comprising a charging antenna, wherein the charging antenna transmits a charging command for charging a charge capacitor included in the tag attached to the object.

7. The RFID antenna system of claim 6, further comprising a gate configured for the object to pass, wherein the charging antenna is installed at a point before the object passes the gate.

8. The RFID antenna system of claim 1, wherein the first antenna group including a plurality of first antennas and the second antenna group including a plurality of second antennas include a bar-type antenna attached perpendicular to the ground, or a flat-type antenna attached to the ground in parallel with the ground.

9. A control method of an RFID antenna system, comprising: installing a first antenna group including a plurality of first antennas and a second antenna group including a plurality of second antennas; transmitting, by a reader, a transmission-only command to the first antenna group so that the first antenna group functions as a transmission-only antenna transmitting information request data to an RFID tag; receiving, by the reader, object data of the tag transmitted in opposition to the information request data via the second antenna group; and performing a data in a data process server by receiving a plurality of object data transmitted from the reader via the plurality of second antennas.

10. The control method of claim 9, wherein the plurality of first antennas and the plurality of second antennas are installed in such a manner that types of groups are repeatedly alternated.

11. The control method of claim 9, wherein the reader receives the object data via the first antenna group by interchanging between the first antenna group and the second antenna group in response to a switching signal, and transmits the transmission-only command to the second antenna group.
